# EUROPEAN PATENT SPECIFICATION

(11) **EP 2 480 817 B1**
(45) Date of publication and mention of the grant of the patent: **19.04.2017**
(21) Application number: 10779798.7
(22) Date of filing: 17.11.2010
(51) Int. Cl.: F21V 23/00, F21V 15/01, F21Y 115/10, F21Y 105/10

(54) **LED LIGHTING MODULE WITH CO-MOLDED METAL CONTACTS**
LED-BELEUCHTUNGSMODUL MIT ANGEFORMTEN METALLKONTAKTEN
MODULE D'ÉCLAIRAGE À DEL AVEC CONTACTS MÉTALLIQUES CO-MOULÉS

(30) Priority: 04.12.2009 IT TO20090959
(43) Date of publication of application: 01.08.2012
(73) Proprietor: OSRAM GmbH, 80807 München (DE); OSRAM S.P.A. - SOCIETA' RIUNITE OSRAM EDISON CLERICI, 20126 Milano (IT)
(72) Inventor: BIZZOTTO, Alessandro, I-31033 Castelfranco Veneto (IT); SCORDINO, Alessandro, I-30031 Dolo (Venezia) (IT); PREUSCHL, Thomas, 93161 Sinzing (DE)
(86) International application number: PCT/EP2010/067635
(87) International publication number: WO 2011/067115

(56) References cited:
- WO-A1-2008/115983
- WO-A1-2009/057433
- WO-A2-2005/056269
- WO-A2-2008/024761
- US-A1- 2003 030 745
- US-A1- 2007 201 225
- US-B1- 7 000 478

## Description

### Field of the invention

The description refers to an LED lighting module comprising:
a printed circuit board, at least one LED connected to said printed circuit board, a supply circuit mounted on said printed circuit board, connector means for electrically connecting said supply circuit to an external power source, and a protective casing made of plastic applied to said printed circuit board.

### Description of the prior art

In traditional systems, LED modules of the type indicated above are provided with a connector welded to the printed circuit board and arranged to connect the supply circuit electrically to an external power source. A protective casing is applied to the printed circuit board to protect the LEDs and the components of the supply circuit mounted on the printed circuit board.

The system according to the prior art suffers from multiple disadvantages.

In the first place, the use of standard connectors means that the protective casing has to be positioned at a height above the printed circuit board equal to or greater than the height of the connector. This can shade the lighting region, and thus reduce the efficiency of the system.

A second problem is that in the known systems there is a gap between the protective casing and the connector. If the lighting module is to have a certain International Protection rating, the protective casing must be provided with additional elements (seals, etc.).

### Object and summary of the invention

It is an object of the invention to overcome the disadvantages outlined above.

According to the invention, this object is achieved with an LED lighting module having the features claimed in the claims which follow.

The claims are an integral part of the technical teaching given here in relation to the invention.

### Brief description of the accompanying illustrations

The invention will now be described, purely by way of non-restrictive example, with reference to the accompanying illustrations, in which:
- figure 1 is a partial perspective view of an LED lighting module according to the prior art, and
- figures 2, 3, 4, and 5 are schematic views illustrating embodiments of the system described here.

### Detailed description of embodiments

The following description will explain various specific details designed to give an in-depth understanding of the embodiments. The embodiments may be produced without one or more of the specific details, or using other methods, components, materials, etc. In other cases, known structures, materials or operations are not shown or described in detail so as not to obscure various aspects of the embodiments.

Reference to "an embodiment" in this description means that a particular configuration, structure or feature described in relation to the embodiment is included in at least one embodiment. Consequently, expressions such as "in an embodiment", which may occur in various places in this description, do not necessarily refer to the same embodiment. Furthermore, particular shapes, structures or features may be combined as suitable in one or more embodiments.

References used herein are purely for convenience and do not therefore define the scope of protection or the coverage of the embodiments.

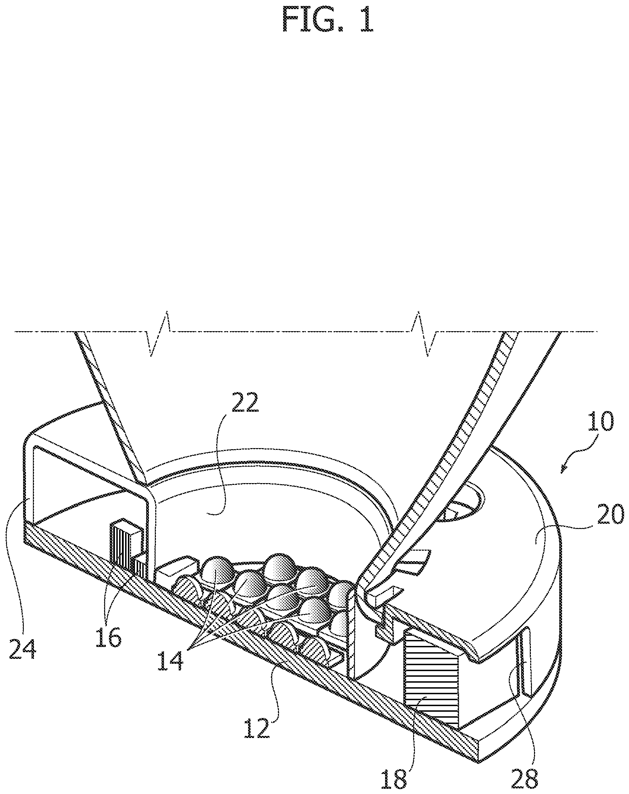

In figure 1, reference 10 is an LED lighting module according to the prior art. The lighting module 10 comprises a printed circuit board 12 to which a plurality of LEDs 14 are connected. The printed circuit board 12 supports a supply circuit made up of a plurality of electrical or electronic components 16 connected to the printed circuit board 12. The LED module 10 according to the prior art comprises a connector 18 for electrically connecting the supply circuit 16 to an external power source. The connector 18 is connected to the printed circuit board 12. The LED module 10 also includes a protective casing 20 made of plastic which encloses the supply circuit components 16. The protective casing 20 has an inner wall 22 which surrounds the LEDs 14 and an outer wall 24 which extends around the outer perimeter of the printed circuit board 12. An optical element 26, such as a reflector, may be connected to the protective casing 20.

In the prior art system illustrated in figure 1, the casing 20 must be at a minimum height above the printed circuit board 12 greater than or equal to the height of the connector 18. This can cause shading of the lighting region and partly compromise the efficiency of the module 10. Furthermore, in the prior art lighting module 10 there is a gap 27 between the connector 18 and the protective casing 20. This gap means that the product does not have a good International Protection rating. If it is wished to increase the International Protection rating in a lighting module of the type illustrated in figure 1, seals or similar additional elements must be added to prevent ingress between the connector 18 and the protective casing 20.

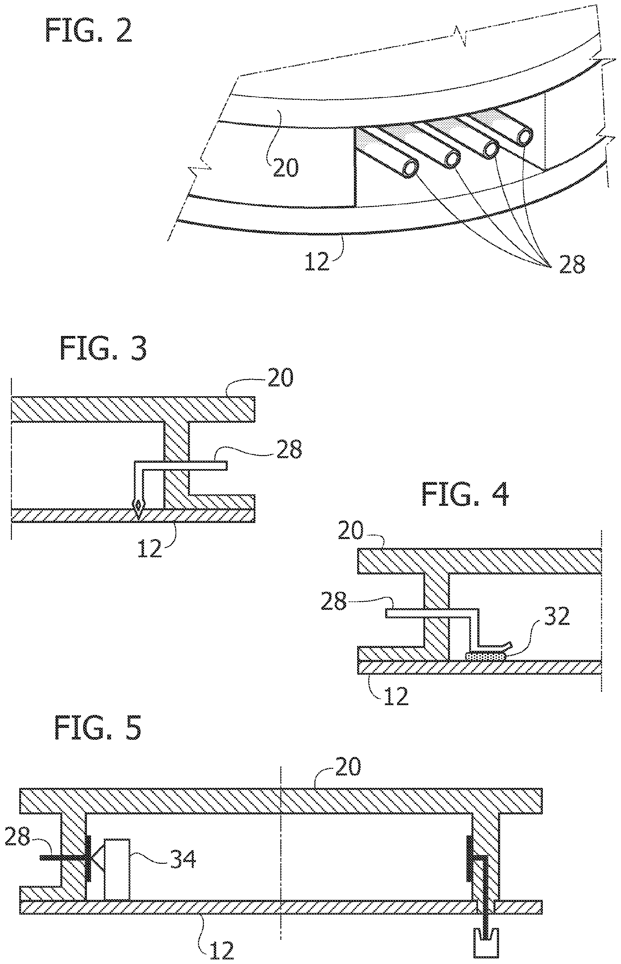

The system described here replaces the connector 18 with metal contacts co-molded into the protective casing 20. Figures 2-5 illustrate various embodiments of this system. In figures 2-5, elements corresponding to those described above are indicated by the same reference numbers.

Referring to figure 2, the plastic protective casing 20 supports a plurality of co-molded metal contacts 28. The co-molded metal contacts 28 are accessible from the outside of the casing 20 and are used to connect the LED module 10 electrically to an external power source. On the inside of the protective casing 20 the co-molded metal contacts 28 are connected electrically to the tracks of the printed circuit board 12. This connection can be done in various ways, as illustrated schematically in figures 3, 4, and 5.

In the embodiment illustrated in figure 3, the co-molded metal contacts 28 are of press-fit type with one end 30 capable of being pressed into the printed circuit board 12. In this version the printed circuit board 12 should be made of FR4, with a thickness of 0.6 mm to 2 mm.

In the embodiment illustrated in figure 4 the co-molded metal contacts 28 are connected to the printed circuit board 12 by soldering 32. Soldering 32 can be done from the outside of the printed circuit board 12. The contacts 28 may also have an elastic portion (such as a spring) to compensate for tolerances and/or directly to make the contact with the printed circuit board 12.

In the embodiment illustrated in figure 5 the co-molded metal contacts 28 are connected electrically to the printed circuit board 12 by spring contacts 34.

In the embodiment illustrated in figure 5, one of the contacts 28 extends through the printed circuit board 12 to form a back-entry contact.

In general, the lighting module may also include means for aligning the protective casing 20 and the printed circuit board 12, e.g. threaded fasteners or locating dowels, to ensure reliable contact without the need for further adaptations.

The system described here allows a good International Protection rating to be obtained automatically because there is no gap between the connector and the casing. The height of the casing above the printed circuit board can be less than in known systems, which is advantageous for reducing shading effects.

Clearly, without departing from the principle of the invention, the details of construction and the embodiments may vary, even significantly, compared with those illustrated here purely by way of non-restrictive example without thereby departing from the scope of the invention as defined in the accompanying claims.

## Claims

1. An LED lighting module comprising:
- a printed circuit board (12),
- at least one LED (14) connected to said printed circuit board (12),
- a supply circuit (16) mounted on said printed circuit board (12),
- connector means for electrically connecting said supply circuit (16) to an external power source, and
- a protective casing (20) made at least partly of plastic or any other insulating material applied to said printed circuit board (12),
which module is **characterized in that** said connector means comprise a plurality of metal contacts (28) co-molded into said protective casing (20).

2. The lighting module as claimed in claim 1, **characterized in that** said co-molded metal contacts (28) are "press-fit" contacts having ends (30) pressed into said printed circuit board (12).

3. The lighting module as claimed in claim 1, **characterized in that** said co-molded metal contacts (28) are soldered to said printed circuit board (12).

4. The lighting module as claimed in claim 1, **characterized in that** said co-molded metal contacts (28) are connected electrically to the printed circuit board (12) by means of spring contacts (34).

5. The lighting module as claimed in claim 1, **characterized in that** at least one of said
contacts (28) extends through said printed circuit board (12).

6. The lighting module as claimed in claim 1, **characterized in that** at least one of the contacts (28) has an elastic portion for compensation for tolerances.

7. The lighting module as claimed in claim 1, **characterized in that** said lighting module comprises means for aligning said protective casing (20) and said printed circuit board (12).

## Patentansprüche

1. LED-Beleuchtungsmodul, das Folgendes umfasst:
- eine Leiterplatte (12)
- wenigstens eine LED (14), die mit der Leiterplatte (12) verbunden ist,
- einen Versorgungsschaltkreis (16), der auf der Leiterplatte (12) montiert ist,
- Verbindermittel zum elektrischen Verbinden des Versorgungsschaltkreises (16) mit einer externen Leistungsquelle, und
- ein Schutzgehäuse (20), das wenigstens teilweise aus Kunststoff oder einem beliebigen anderen isolierenden Material gefertigt und auf die Leiterplatte (12) aufgebracht ist,
wobei das Modul **dadurch gekennzeichnet ist, dass** das Verbindermittel mehrere Metallkontakte (28) umfasst, die in das Schutzgehäuse (20) eingegossen sind.

2. Beleuchtungsmodul nach Anspruch 1, **dadurch gekennzeichnet, dass** die eingegossenen Metallkontakte (28) "Presssitz"-Kontakte mit Enden (30), die in die Leiterplatte (12) gepresst sind, sind.

3. Beleuchtungsmodul nach Anspruch 1, **dadurch gekennzeichnet, dass** die eingegossenen Metallkontakte (28) auf die Leiterplatte (12) gelötet sind.

4. Beleuchtungsmodul nach Anspruch 1, **dadurch gekennzeichnet, dass** die eingegossenen Metallkontakte (28) mittels Federkontakten (34) elektrisch mit der Leiterplatte (12) verbunden sind.

5. Beleuchtungsmodul nach Anspruch 1, **dadurch gekennzeichnet, dass** sich wenigstens einer der Kontakte (28) durch die Leiterplatte (12) hindurch erstreckt.

6. Beleuchtungsmodul nach Anspruch 1, **dadurch gekennzeichnet, dass** wenigstens einer der Kontakte (28) einen elastischen Teil zum Kompensieren für Toleranzen aufweist.

7. Beleuchtungsmodul nach Anspruch 1, **dadurch gekennzeichnet, dass** das Beleuchtungsmodul Mittel zum Ausrichten des Schutzgehäuses (20) und der Leiterplatte (12) aufweist.

## Revendications

1. Un module d'éclairage à LED comprenant :
- une carte à circuits imprimés (12),
- au moins une LED (14) raccordée à ladite carte à circuits imprimés (12),
- un circuit d'alimentation (16) monté sur ladite carte à circuits imprimés (12),
- un moyen de connexion destiné au raccordement électrique dudit circuit d'alimentation (16) à une source d'alimentation électrique externe, et
- un boîtier de protection (20) composé au moins partiellement de plastique ou de tout autre matériau isolant appliqué à ladite carte à circuits imprimés (12),
ledit module étant **caractérisé en ce que** ledit moyen de connexion comprend une pluralité de contacts métalliques (28) co-moulés dans ledit boîtier de protection (20).

2. Le module d'éclairage selon la revendication 1, **caractérisé en ce que** lesdits contacts métalliques co-moulés (28) sont des contacts "à ajustement par pression" possédant des extrémités (30) pressées dans ladite carte à circuits imprimés (12).

3. Le module d'éclairage selon la revendication 1, **caractérisé en ce que** lesdits contacts métalliques co-moulés (28) sont soudés à ladite carte à circuits imprimés (12).

4. Le module d'éclairage selon la revendication 1, **caractérisé en ce que** lesdits contacts métalliques co-moulés (28) sont raccordés électriquement à la carte à circuits imprimés (12) au moyen de contacts à ressort (34).

5. Le module d'éclairage selon la revendication 1, **caractérisé en ce qu'**au moins un desdits contacts (28) s'étend au travers de ladite carte à circuits imprimés (12).

6. Le module d'éclairage selon la revendication 1, **caractérisé en ce qu'**au moins un des contacts (28) possède une partie élastique destinée à la compensation de tolérances.

7. Le module d'éclairage selon la revendication 1, **caractérisé en ce que** ledit module d'éclairage comprend un moyen d'alignement dudit boîtier de protection (20) et de ladite carte à circuits imprimés (12).
